# EUROPEAN PATENT APPLICATION

(11) **EP 4 641 294 A1**
(43) Date of publication of application: **29.10.2025**
(21) Application number: 23907330.7
(22) Date of filing: 06.10.2023
(51) Int. Cl.: G02F 1/137, G02F 1/1337, G02F 1/1343, G02F 1/1335, G02F 1/1339, G02B 5/30, E06B 9/24, B60J 3/04

(54) **OPTICAL LAMINATE AND SMART WINDOW INCLUDING SAME**

(30) Priority: 22.12.2022 KR 20220181822
(71) Applicant: Dongwoo Fine-Chem Co., Ltd., Iksan-si, Jeollabuk-do 54631 (KR)
(72) Inventor: AHN, Hong-Jun, Iksan-si, Jeonbuk-do 54631 (KR); KIM, Dong-Hwi, Iksan-si, Jeonbuk-do 54631 (KR)
(74) Representative: Betten & Resch
(86) International application number: PCT/KR2023/015431
(87) International publication number: WO 2024/136044

(57) **Abstract**

The present invention relates to a transmittance-variable optical laminate and a smart window including same, the transmittance-variable optical laminate including: a first polarizing plate; a first electrode layer formed on a surface of the first polarizing plate; a second polarizing plate opposite to the first polarizing plate; a second electrode layer formed on a surface of the second polarizing plate and opposite to the first electrode layer; and a liquid crystal layer provided between the first electrode layer and the second electrode layer, wherein at least one electrode layer of the first and second electrode layers is in direct contact with any one polarizing plate of the first and second polarizing plates, the first electrode layer includes a plurality of first unit electrodes arranged in a first direction, and the second electrode layer includes a plurality of second unit electrodes arranged in a second direction.

## Description

### Technical Field

The present invention relates to a transmittance variable optical laminate and a smart window including the same.

### Background Art

In general, there are many cases in which an external light blocking coating is applied to a glass window of a means of transportation such as a vehicle. However, the transmittance of a conventional glass window of a means of transportation is fixed, and the transmittance of the external light blocking coating is also fixed. Therefore, the overall transmittance of the conventional window of the means of transportation is fixed, which may cause an accident. For example, when the overall transmittance is preset low, there is no problem during day when ambient light is sufficient. However, there is a problem in that it is difficult for a driver or the like to properly check the surroundings of the means of transportation at night when ambient light is insufficient. Alternatively, when the overall transmittance is preset high, there is a problem of causing glare to a driver or the like during day when ambient light is sufficient. Accordingly, a transmittance variable optical laminate capable of changing the transmittance of light when a voltage is applied has been developed.

The transmittance variable optical laminate is driven to change transmittance by driving liquid crystals in response to application of a voltage. The transmittance variable optical laminates developed to date are manufactured by forming an electrode layer for driving liquid crystals on a separate substrate and then combining the electrode layer with other elements, such as a polarizing plate, and integrally patterning each electrode layer for driving liquid crystals.

For example, Japanese Patent Application Publication No. 2018-010035 also discloses a transmittance variable optical laminate including a transparent electrode layer formed by integral patterning on a polycarbonate (PC) substrate having a predetermined thickness.

However, the transmittance variable optical laminate includes a separate substrate in order to form the electrode layer as described above, there are problems in that the manufacturing process becomes complicated, which increases the manufacturing cost, the thickness of the laminate increases, and retardation occurs, which causes a change in the transmittance.

In addition, if each electrode layer for driving liquid crystals is formed integrally, there is a problem in that application and non-application of the driving voltage only to the entire region of the liquid crystal layer are possible, and thus divisional driving of a portion of the liquid crystal layer is not possible.

Therefore, there is a need for development of a transmittance variable optical laminate that, by not including a separate substrate for forming an electrode layer, may have a simplified manufacturing process and a reduced thickness while enabling divisional driving of a portion of a liquid crystal layer.

### DISCLOSURE

### Technical Problem

An object of the present invention is to provide a transmittance variable optical laminate that, by including a plurality of divided driving regions, may be driven in various modes.

Another object of the present invention is to provide a transmittance variable optical laminate having a simplified manufacturing process.

Still another object of the present invention is to provide a transmittance variable optical laminate having a reduced thickness.

Yet another object of the present invention is to provide a transmittance variable optical laminate having improved transmittance in a light transmission mode.

Still yet another object of the present invention is to provide a smart window including the transmittance variable optical laminate, and a transportation means, a wearable device, or a window for a building using the same.

However, the objects of the present invention are not limited to the objects mentioned above, and other objects not mentioned will be clearly understood by those skilled in the art from the following description.

### Technical Solution

The present invention relates to a transmittance variable optical laminate including: a first polarizing plate; a first electrode layer formed on one surface of the first polarizing plate; a second polarizing plate opposite to the first polarizing plate; a second electrode layer formed on one surface of the second polarizing plate and opposite to the first electrode layer; and a liquid crystal layer provided between the first electrode layer and the second electrode layer, wherein at least one of the first electrode layer and the second electrode layer is formed in direct contact with any one of the first polarizing plate and the second polarizing plate, and wherein the first electrode layer includes a plurality of first unit electrodes arranged in a first direction, and the second electrode layer includes a plurality of second unit electrodes arranged in a second direction.

In a first aspect of the present invention, the unit electrodes may be formed as stripes spaced apart from each other.

In a second aspect of the present invention, the first unit electrodes and the second unit electrodes may be arranged to be orthogonal to each other.

In a third aspect of the present invention, the spacing between the unit electrodes may be 30 to 100 µm.

In a fourth aspect of the present invention, the transmittance variable optical laminate may exhibit maximum transmittance and minimum transmittance at a driving voltage of 10 V or less.

In a fifth aspect of the present invention, the maximum transmittance may be 35% to 45%.

In a sixth aspect of the present invention, the minimum transmittance may be 0% to 3%.

In a seventh aspect of the present invention, the transmittance variable optical laminate may further include a driving circuit unit configured to apply different driving voltages to the unit electrodes.

In an eighth aspect of the present invention, at least one of the first electrode layer and the second electrode layer may include at least one selected from the group consisting of a transparent conductive oxide, a metal, a carbonaceous material, a conductive polymer, a conductive ink, and nanowires.

In a ninth aspect of the present invention, at least one of the first polarizing plate and the second polarizing plate may have a thickness of 30 to 200 µm.

In a tenth aspect of the present invention, the liquid crystal layer may include at least one spacer selected from the group consisting of a ball spacer and a column spacer.

In an eleventh aspect of the present invention, the spacer may have a height of 1 to 10 µm.

In a twelfth aspect of the present invention, the area occupied by the spacer in the liquid crystal layer may be 0.01% to 10% of the area of the liquid crystal layer.

In a thirteenth aspect of the present invention, the transmittance variable optical laminate may further include at least one selected from the group consisting of an overcoat layer, a pressure-sensitive adhesive layer, a UV-absorbing layer, and a hard coating layer.

The present invention also relates to a smart window including the above-described transmittance variable optical laminate.

The present invention also relates to a means of transportation including the smart window.

The present invention relates to an automobile in which the smart window is applied to at least one of a front window, a rear window, a side window, a sunroof window, and an interior partition.

The present invention also relates to a wearable device including the smart window.

The present invention relates to a window for a building including the smart window.

### Advantageous Effects

The transmittance variable optical laminate according to the present invention may be driven in various modes compared to conventional optical laminates by including a plurality of divided driving regions. Specifically, when voltage is applied to the electrode layer, the unit cells may be individually driven, and thus only a desired unit region may be selectively driven.

In addition, in the transmittance variable optical laminate according to the present invention, since the electrode layer is formed directly on one surface of the polarizing plate, the transmittance variable optical laminate does not include a separate substrate for forming the electrode layer, and thus may have a simplified manufacturing process, a significantly reduced thickness, improved transmittance in a light transmission mode, compared to conventional optical laminates.

### Brief Description of Drawings

FIG. 1 shows the structure of a transmittance variable optical laminate according to one embodiment of the present invention.
FIGS. 2 to 5 illustrate the driving modes of the transmittance variable optical laminate of the present invention.
FIG. 6 is a graph showing the driving voltage-dependent transmittance of each unit cell of an optical laminate manufactured according to a preparation example of the present invention.

### Best Mode

The present invention relates to a transmittance variable optical laminate which, by including a plurality of unit electrodes to which different driving voltages are applied, may be driven in various modes by selectively driving only a desired unit region, and by forming an electrode layer for driving a liquid crystal layer directly on one surface of a polarizing plate, may have a reduced thickness and improved transmittance in a light transmission mode.

More specifically, the present invention relates to a transmittance variable optical laminate including: a first polarizing plate; a first electrode layer formed on one surface of the first polarizing plate; a second polarizing plate opposite to the first polarizing plate; a second electrode layer formed on one surface of the second polarizing plate and opposite to the first electrode layer; and a liquid crystal layer provided between the first electrode layer and the second electrode layer, wherein at least one of the first electrode layer and the second electrode layer is formed in direct contact with any one of the first polarizing plate and the second polarizing plate, and wherein the first electrode layer includes a plurality of first unit electrodes arranged in a first direction, and the second electrode layer includes a plurality of second unit electrodes arranged in a second direction.

The transmittance variable optical laminate of the present invention is particularly suitable for technical fields where the transmittance of light can be changed in response to the application of voltage, and may be used, for example, for a smart window or the like.

The term "smart window" means an optical structure that controls the amount of light or heat passing therethrough by changing light transmittance in response to the application of an electrical signal. In other words, the smart window is configured to be changed into a transparent, opaque or translucent state by voltage and is also called variable transmittance glass, light control glass, or smart glass.

The smart window may be used as a partition for partitioning the internal space of a vehicle or a building or as a partition for privacy, and may be used as a skylight window arranged at an opening of a building. Furthermore, the smart window may be used as highway signs, notice boards, score boards, clocks or advertisement screens, and may be used to replace windows of vehicles, buses, airplanes, ships, or trains, or glass of means of transportation, such as a sunroof.

The transmittance variable optical laminate of the present invention may also be used for the smart window in the various technical fields mentioned above, but since the electrode layer is directly formed on the polarizing plate, the transmittance variable optical laminate does not include a separate substrate for forming the electrode layer, and thus has a small thickness and is favorable in terms of flexural properties. In addition, the transmittance variable optical laminate may be driven in various modes by including a plurality of unit electrodes, and thus may particularly suitable for use for a smart window for a vehicle or a building. In one or more embodiments, a smart window having applied thereto the transmittance variable optical laminate of the present invention may be used as a front window, a rear window, a side window, and a sunroof window of a means of transportation such as an automobile, or a window for a building, and in addition to being used to block external light, may also be used for partitioning the internal space of an automobile or a building, or for protecting privacy, such as being used as an internal partition. In addition, the smart window may also be used for wearable devices such as helmets, glasses, or watches.

Hereinafter, embodiments of the present invention will be described in more detail with reference to the accompanying drawings. However, the following drawings attached to this specification illustrate preferred embodiments of the present invention, and serve to aid in further understanding of the technical idea of the present invention together with the contents of the present invention described above. Therefore, the present invention should not be interpreted as being limited only to matters described in the drawings.

Terms used in the present specification are for purpose of describing embodiments and are not intended to limit the present invention. In the present specification, singular forms also include plural forms unless the context clearly indicates otherwise. For example, the term "polarizing plate" as used herein may mean at least one of a first polarizing plate and a second polarizing plate, and the term "electrode layer" may mean at least one of a first electrode layer and a second electrode layer.

As used herein, "comprises" and/or "comprising" are/is intended to denote the existence of one or more stated components, steps, operations, and/or elements, but do not exclude the probability of existence or addition of one or more other components, steps, operations, and/or elements. Throughout the specification, like reference numerals refer to like components.

Spatially relative terms, such as "below", "lower surface", "beneath ", "above", "upper surface", "on" and the like, may be used to easily describe the relationship between one element or component(s) and other element or components(s) as illustrated in the figures. Spatially relative terms should be understood to encompass different orientations of the element in use or operation, in addition to the orientation depicted in the figures. For example, when elements illustrated in the figures are turned over, an element described as being "below" or "beneath" another element may be placed "above" the other element. Thus, the exemplary term "below" may include both the terms "above" and "below". The element may also be oriented in a different direction, and thus spatially relative terms may be interpreted according to the orientation.

As used herein, the term "plane direction" may be interpreted as a direction orthogonal to the polarizing plate and/or the electrode layer, that is, the direction of the user's view.

As used herein, the term "substantially" may be interpreted to include not only physically completely identical or identical, but also being within the error range in the measurement or manufacturing process, and for example, may be interpreted to mean a range of error of 5% or less.

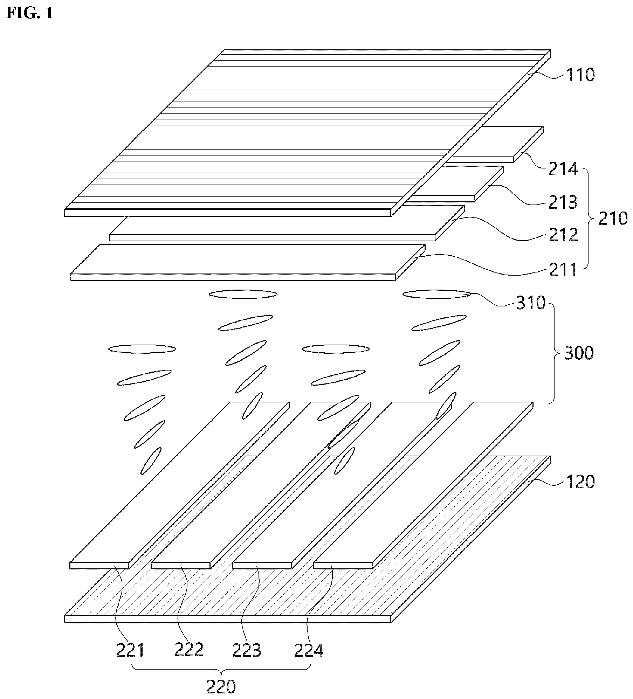

FIG. 1 shows the structure of a transmittance variable optical laminate according to one embodiment of the present invention.

Referring to FIG. 1, a transmittance variable optical laminate according to one embodiment of the present invention may include a first polarizing plate 110, a second polarizing plate 120, a first electrode layer 210, a second electrode layer 220, and a liquid crystal layer 300.

The polarizing plate 110, 120 includes a polarizer that performs a polarizing function, and may include a protective film depending on the needs of the user.

The polarizer may be a conventional or later-developed polarizer, and may be, for example, a stretched polarizer or a coated polarizer.

In one embodiment, the stretched polarizer may include a stretched polyvinyl alcohol (PVA)-based resin. The polyvinyl alcohol (PVA)-based resin may be a polyvinyl alcohol-based resin obtained by saponifying a polyvinyl acetate-based resin. Examples of the polyvinyl acetate-based resin include polyvinyl acetate, which is a homopolymer of vinyl acetate, as well as copolymers of vinyl acetate and other monomers copolymerizable therewith. Examples of the other monomers include unsaturated carboxylic acid-based monomers, unsaturated sulfonic acid-based monomers, olefin-based monomers, vinyl ether-based monomers, acrylamide-based monomers having an ammonium group, and the like. In addition, the polyvinyl alcohol (PVA)-based resin may include a modified resin, for example, aldehyde-modified polyvinyl formal or polyvinyl acetal.

In one embodiment, the coated polarizer may be formed by a liquid crystal coating composition, wherein the liquid crystal coating composition may include a reactive liquid crystal compound, a dichroic dye, and the like.

The term "reactive liquid crystal compound" may refer to a compound including, for example, a mesogen skeleton and also including one or more polymerizable functional groups. Such reactive liquid crystal compounds are variously known under the name reactive mesogen (RM). The reactive liquid crystal compound may be polymerized by light or heat to form a cured film in which a polymer network is formed while maintaining the liquid crystal alignment.

The reactive liquid crystal compound may be a monofunctional or multifunctional reactive liquid crystal compound. The monofunctional reactive liquid crystal compound may refer to a compound having one polymerizable functional group, and the multifunctional reactive liquid crystal compound may refer to a compound having two or more polymerizable functional groups.

The dichroic dye is a component included in the liquid crystal coating composition to impart polarization properties, and has different absorbances in the major and minor axis directions of the molecule. The dichroic dyes may be a conventional or later-developed dichroic dye, and may include at least one selected from the group consisting of azo dyes, anthraquinone dyes, perylene dyes, merocyanine dyes, azomethine dyes, phthaloperylene dyes, indigo dyes, dioxazine dyes, polythiophene dyes, and phenoxazine dyes.

The liquid crystal coating composition may further include a solvent capable of dissolving the reactive liquid crystal compound and the dichroic dye, and examples of the solvent include propylene glycol monomethyl ether acetate (PGMEA), methyl ethyl ketone (MEK), xylene, and chloroform. In addition, the liquid crystal coating composition may further include a leveling agent, a polymerization initiator, and the like, within a range that does not impair the polarization characteristics of the coating film.

The protective film serves to protect the polarization characteristics of the polarizer from post-processing and external environments.

The protective film may be formed on and in direct contact with one or both surfaces of the polarizer, without being limited thereto and may be formed on another member provided in the polarizing plate to constitute the polarizing plate.

In one or more embodiments, the protective layer may include at least one selected from the group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene(PP), polymethyl acrylate (PMA), polymethyl methacrylate (PMMA), polyethyl acrylate (PEA), polyethyl methacrylate (PEMA), and a cyclic olefin polymer (COP).

In another embodiment, the polarizing plate 110, 120 may further include, in addition to the components described above, other components to assist or enhance the characteristics of the polarizer. For example, the polarizing plate may include a retardation matching layer or a refractive index-matching layer to enhance the optical characteristics of the polarizing plate, and may further include an overcoat layer or the like to further enhance the mechanical durability of the polarizing plate.

The retardation matching layer is intended to match the optical properties of the optical laminate, may be in the form of a retardation film or the like, and may be a conventional or later-developed retardation film. For example, quarter-wave plates or half-wave plates may be used to retard the phase of light, and these may be used alone or in combination.

The retardation matching layer may be formed on and in direct contact with one surface of the polarizer, in substitute for the protective film, without being limited thereto. For example, the retardation matching layer may be formed on one surface of the protective film or one surface of the refractive index-matching layer.

The retardation matching layer may include either a stretched polymer film obtained by stretching a polymer film capable of imparting optical anisotropy in an appropriate manner, or a liquid crystal polymer film.

In one embodiment, the stretched polymer film may include a polymer layer including a polyolefin such as polyethylene (PE) or polypropylene (PP), a cyclic olefin polymer (COP) such as polynorbornene, a polyester such as polyvinyl chloride (PVC), polyacrylonitrile (PAN), polysulfone (PSU), acrylic resin, polycarbonate (PC), or polyethylene terephthalate(PET), a cellulose acetate-based polymer such as polyacrylate, polyvinyl alcohol (PVA) or triacetyl cellulose (TAC), or a copolymer of two or more monomers among the monomers forming the polymers.

The method of obtaining the stretched polymer film is not particularly limited, and for example, the stretched polymer film may be obtained by forming the polymer material into a film form, followed by stretching. The method for forming the polymer material into a film form is not particularly limited, and the polymer material may be formed into a film by a known method such as injection molding, sheet molding, blow molding, injection blow molding, inflation molding, extrusion molding, foam molding, cast molding, or the like. In addition, a secondary processing molding method such as pressure molding or vacuum molding may also be used. Thereamong, extrusion molding or cast molding is preferably used. In this case, for example, an unstretched film may be extrusion-molded using an extruder equipped with a T-die, a circular die, or the like. When a molded product is obtained by extrusion molding, a material prepared by melt-kneading various resin components, additives, etc. may be used and the molded product may be formed by melt-kneading during extrusion molding. Furthermore, after various resin components are dissolved using a common solvent, for example, a solvent such as chloroform or methylene chloride, an unstretched film may be cast-molded by cast drying and solidification.

The stretched polymer film may be provided by performing uniaxial stretching on the formed film in a mechanical direction (MD, longitudinal or lengthwise direction), and by performing uniaxial stretching in a transverse direction (TD, or widthwise direction) perpendicular to the MD. Alternatively, a biaxially stretched film may be manufactured by performing stretching by a sequential biaxial stretching method of roll stretching and tenter stretching, a simultaneous biaxial stretching method of tenter stretching, a biaxial stretching method of tubular stretching, or the like.

The liquid crystal polymer film may include a reactive liquid crystal compound in a polymerized state. The above description of the reactive liquid crystal compound of the coated polarizer may be equally applied to the reactive liquid crystal compound.

In one or more embodiments, the thickness of the retardation matching layer may be 10 µm to 100 µm in the case of the stretched polymer film, and 0.1 µm to 5 µm in the case of the liquid crystal polymer film.

The refractive index-matching layer is provided to compensate for the refractive index difference of the optical laminate caused by the electrode layer, and may serve to improve the viewing characteristics, etc. by reducing the refractive index difference. Furthermore, the refractive index-matching layer may be provided to correct the color caused by the electrode layer. In particular, the electrode layer is formed to have a plurality of unit electrodes as described below, and at this time, the refractive index-matching layer may compensate for the difference in transmittance between a pattern region with the pattern formed and a non-pattern region where no pattern is formed.

Specifically, the electrode layer is laminated adjacent to other members having a refractive index different therefrom (for example, the polarizer, etc.), and the difference in the refractive index between the electrode layer and other layer adjacent thereto may lead to the difference in light transmittance. In particular, if a pattern is formed on the electrode layer as described in the present invention, a problem may arise in that the pattern region and the non-pattern region are viewed to be distinguishable from each other. Therefore, the refractive index-matching layer is included to compensate for refractive index, thereby reducing the difference in light transmittance of the optical laminate. In particular, when a pattern is formed on the electrode layer, the refractive index-matching layer prevents the pattern region and the non-pattern region from being viewed to be distinguishable from each other.

In one embodiment, the refractive index of the refractive index-matching layer may be appropriately selected depending on the material of another adjacent member, but is preferably 1.4 to 2.6, more preferably 1.4 to 2.4. In this case, it is possible to prevent light loss caused by a sharp difference in refractive index between the electrode layer and other members such as the polarizer.

The refractive index-matching layer is not particularly limited as long as it can prevent the sharp difference in refractive index between the electrode layer and other members such as the polarizer, and it may include a compound used in the formation of a conventional or later-developed refractive index-matching layer. For example, the refractive index-matching layer may be formed from a refractive index-matching layer formation composition including a polymerizable isocyanurate compound.

In one or more embodiments, the polarizing plate 110, 120 may have a thickness of 30 to 200 µm, preferably 30 to 170 µm, more preferably 50 to 150 µm. In this case, the polarizing plate makes it possible to manufacture an optical laminate having a small thickness while maintaining optical properties.

The electrode layer 210, 220 is provided for driving the liquid crystal layer 300 and may be formed in direct contact with the polarizing plates 110, 120. For example, as illustrated in FIG. 1, the first electrode layer 210 and the second electrode layer 220 may be formed in direct contact with the first polarizing plate 110 and the second polarizing plate 120, respectively.

Conventionally, an optical laminate used to manufacture a smart window, etc. is manufactured by forming an electrode layer for driving liquid crystals on one surface of a substrate and bonding the other surface of the substrate to a polarizing plate. However, the transmission variable optical laminate according to the present invention is characterized in that, since the electrode layer is directly formed on one surface of the polarizing plate without including a separate substrate for forming the electrode layer, the laminate has improved transmittance in a light transmission mode and improved flexural properties while having a reduced thickness.

In one embodiment, the electrode layer 210, 220 may be formed by direct deposition on one surface of the polarizing plate 110, 120. In this case, the electrode layer 210, 220 may be formed in direct contact with a pretreated surface of the polarizing plate 110, 120 after performing pre-treatment such as corona treatment or plasma treatment on one surface of the polarizing plate 110, 120 in order to improve the adhesion thereof to the polarizing plate 110, 120. The pre-treatment is not limited to corona treatment or plasma treatment, and may be performed using any conventional or later-developed pre-treatment process within a range that does not impair the purpose of the present invention.

In another embodiment, the electrode layer 210, 220 may be formed on one surface of the polarizing plate 110, 120 with a highly adhesive layer (not shown) interposed therebetween in order to improve the adhesion between the electrode layer and the polarizing plate 110, 120.

The electrode layer 210, 220 has a visible light transmittance of 50% or more, preferably 60% or more, and for example, may include at least one selected from the group consisting of a transparent conductive oxide, a metal, a carbonaceous material, a conductive polymer, a conductive ink, and nanowires, without being limited thereto, and a conventional or later-developed electrode layer material may be used.

In one or more embodiments, the transparent conductive oxide may include at least one selected from a group consisting of indium tin oxide (ITO), indium zinc oxide (IZO), indium zinc tin oxide (IZTO), aluminum zinc oxide (AZO), gallium zinc oxide (GZO), fluorine tin oxide (FTO), zinc oxide (ZnO), and the like. Furthermore, the metal may include at least one selected from a group consisting of gold (Au), silver (Ag), copper (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), and alloys containing at least one of these metals, and may include, for example, a silver-palladium-copper (APC) alloy or a copper-calcium (CuCa) alloy. The carbonaceous material may include at least one selected from the group consisting of carbon nanotubes (CNTs), graphene, and the like. The conductive polymer may include at least one selected from the group consisting of polypyrrole, polythiophene, polyacetylene, PEDOT, and polyaniline. The conductive ink may be an ink composed of a mixture of metal powder and a curable polymeric binder, and the nanowires may be, for example, silver nanowires (AgNWs).

Furthermore, the electrode layer 210, 220 may be formed to have a structure consisting of two or more layers by combining the above-described materials. For example, in order to reduce the reflectivity of incident light and increase the transmittance, the electrode layer may be formed to have a two-layer structure including a metal layer and a transparent conductive oxide layer.

The electrode layer 210, 220 may be formed by a method commonly used in art. For example, it may be formed by an appropriate process selected from coating processes such as a spin coating process, a roller coating process, a bar coating process, a dip coating process, a gravure coating process, a curtain coating process, a die coating process, a spray coating process, a doctor coating process, a kneader coating process, etc.; printing processes such as a screen printing process, a spray printing process, an inkjet printing process, a relief printing process, an intaglio printing process, a flat printing process, etc.; and deposition processes such as a chemical vapor deposition (CVD), physical vapor deposition (PVD), and plasma-enhanced chemical vapor deposition (PECVD), etc. As described above, it may be formed directly on one surface of the polarizing plate 110, 120 by performing the above process.

In one embodiment, the electrode layer may include a plurality of unit electrodes. For example, the first electrode layer 210 may include a plurality of first unit electrodes 211, 212, 213, 214 arranged in a first direction (e.g., x-axis direction), and the second electrode layer 220 may include a plurality of second unit electrodes 221, 222, 223, 224 arranged in a second direction (e.g., y-axis direction).

The plurality of first unit electrodes 211, 212, 213, 214 of the first electrode layer 210 and the plurality of second unit electrodes 221, 222, 223, 224 of the second electrode layer 220 are characterized in that they are orthogonal with each other and overlap each other to form unit cells. The unit cells may selectively provide a region through which light is transmitted and a region through which light is not transmitted, by individually controlling the amount of light transmitted as voltage is applied by the driving circuit unit. Various embodiments of the present invention according to specific driving of the unit cells will be described in detail later.

The first unit electrodes 211, 212, 213, 214 and the second unit electrodes 221, 222, 223, 224 may be formed by etching the first electrode layer 210 and the second electrode layer 220, respectively, using a laser.

In this case, the first unit electrodes 211, 212, 213, 214 and the second unit electrodes 221, 222, 223, 224 may be formed as stripes spaced apart from each other as shown in FIG. 1, without being limited thereto and may be formed in various patterns such as a grid pattern.

When the unit electrodes are formed as stripes as shown in FIG. 1, the spacing between the unit electrodes is preferably 30 to 100 µm. If the spacing between the unit electrodes is less than 30 µm, the amount of laser irradiation is high, which can easily damage the polarizing plate placed on the lower surface, and the electrode spacing becomes excessively narrow, which can cause current conduction. If the spacing between the unit electrodes is more than 100 µm, a problem may arise in that an electric field is not formed in the spacing portion, so that the spacing portion always remains opaque regardless of whether voltage is applied, and thus is seen by the user.

The laser etching is preferably performed using a laser such as an excimer laser (fundamental wave wavelength of 193 to 308 nm), a YAG laser (fundamental wave wavelength of 1,064 nm), a fiber laser (fundamental wave wavelength of 1,060 nm), a CO₂ laser (fundamental wave wavelength of 10,600 nm), and/or a semiconductor laser. In this case, in order to efficiently remove the electrode layer thin film at the laser light irradiation site and prevent damage to other parts, it is preferable that the wavelength of the fundamental wave is in the range of 500 to 11,000 nm.

The conditions for the laser etching may be appropriately selected by the user according to the spacing between the unit electrodes to be formed, the etching depth, etc., and, for example, the laser etching may be performed under the conditions of a laser output of 0.1 to 100 W, a pulse width of 1,000 ns or less, and a frequency of 10 to 1,000 kHz. If the laser power is excessively low, the removal of the electrode layer thin film tends to be insufficient, but this tendency may be avoided to some extent by lowering the laser scanning speed or increasing the number of laser scans. If the laser power is excessively high, the area where the electrode layer film is removed by the diffusion of heat from the irradiated area becomes extremely larger than the diameter of the laser beam, which may result in poor straightness of the unit electrode pattern, or excessively thin line width, or breakage of the line. In this respect, it is preferable to appropriately adjust the laser output within a range of 0.5 to 20 W, the frequency within a range of 10 to 800 kHz, and the pulse width within a range of 800 ns or less, more preferably, the laser output within a range of 0.5 to 12 W, the frequency within a range of 10 to 600 kHz, and the pulse width within a range of 600 ns or less.

Meanwhile, FIG. 1 illustrates that the first electrode layer 210 and the second electrode layer 220 include four first unit electrodes 211, 212, 213, 214 and four second unit electrodes 221, 222, 223, 224, respectively, without being necessarily limited thereto, and the first electrode layer 210 and the second electrode layer 220 may be divided into various numbers of unit electrodes according to the needs of the user.

The liquid crystal layer 300 may change the driving mode of the optical laminate by controlling the transmittance of light incident in one or more directions, depending on an electric field.

In one embodiment, the liquid crystal layer 300 may mean a region driven by a liquid crystal compound 310, and for example, it may mean a region defined by an alignment film (not shown) and a sealant (not shown) described below, and may further include a spacer (not shown) according to the needs of the user.

The liquid crystal compound 310 is not particularly limited as long as it is driven in response to an electric field and is capable of controlling the light transmittance, and a conventional or later-developed liquid crystal compound may be used. For example, the contents regarding the reactive liquid crystal compound of the above-described coated polarizer may be equally applied to the liquid crystal compound.

The liquid crystal driving mode of the liquid crystal layer 300 is not particularly limited, and for example, the liquid crystal layer may be driven in a twisted nematic (TN) mode as shown in FIG. 1, but may also be driven in a super-twisted nematic (STN) mode, a vertical alignment (VA) mode, an electrically controlled birefringence (ECB) mode, etc.

The spacer may include a ball spacer and/or a column spacer, and is preferably a ball spacer in terms of ease of manufacturing process, etc.

The spacer may include one or more spacers, and preferably has a height of 1 to 10 µm. In addition, when viewed in a planar direction, the area occupied by the spacer in the liquid crystal layer is preferably 0.01 to 10% of the area of the liquid crystal layer in terms of user's visibility and improved transmittance in the light transmission mode.

The alignment film is not particularly limited as long as it serves to align the liquid crystal compound. In one embodiment, the alignment film may be formed by rubbing treatment. In this case, the alignment film is formed by preparing various material layers applicable to the alignment film, such as polyimide, and then forming fine line-shaped concave and convex patterns on the surface of the material layer by a rubbing treatment using a rubbing roll.

In another embodiment, the alignment film may include a photo-alignable or photo-curable polymer. For example, the alignment film may be formed by applying and curing an alignment film coating composition including a photo-alignable or photo-curable polymer, a photopolymerization initiator, and a solvent.

The photo-alignable or photo-curable polymer is not particularly limited, but may be a cinnamate-based polymer, a polyimide-based polymer, or the like. For example, it may be poly(vinyl cinnamate) (PVCi), poly(siloxane cinnamate) (PSCN), poly(ω(4-chalconyloxy)alkoxyphenylmaleimide), 6-FDA-HAB-Cl, or the like. In addition, a conventional or later-developed polymer capable of exhibiting alignment properties may be used.

In another embodiment, the alignment film may be one formed by shaping fine line-shaped concave and convex patterns formed by rubbing treatment, instead of the above-described alignment film or photo-alignment film formed by rubbing treatment.

The sealant is provided along the inactive region of the liquid crystal layer, i.e., the outer peripheral surface, and serves to bond the first polarizing plate and the second polarizing plate to each other. The sealant may be provided to secure a space for the liquid crystal layer to be provided between the first polarizing plate and the second polarizing plate together with the spacer.

The sealant may include a curable resin as a base resin. As the base resin, a UV-curable resin or thermosetting resin known in the art to be usable for a sealant may be used. The UV-curable resin may be a polymer of a UV-curable monomer. The thermosetting resin may be a polymer of a thermosetting monomer.

As the base resin of the sealant, for example, an acrylate-based resin, an epoxy-based resin, a urethane-based resin, a phenol-based resin, or a mixture of these resins may be used. In one embodiment, the base resin may be an acrylate-based resin, wherein the acrylate-based resin may be a polymer of an acrylic monomer. The acrylic monomer may be, for example, a multifunctional acrylate. In another embodiment, the sealant may further include a monomer component in addition to the base resin. The monomer component may be, for example, a monofunctional acrylate. As used herein, the term "monofunctional acrylate" may mean a compound having one acrylic group, and the term "multifunctional acrylate" may mean a compound having two or more acrylic groups. The curable resin may be cured by UV irradiation and/or heating. The UV irradiation or heating may be appropriately performed under conditions that do not impair the purpose of the present application. If necessary, the sealant may further include an initiator, for example, a photoinitiator or a thermal initiator.

The sealant may be formed by a method commonly used in the art, and for example, may be formed by drawing a sealant into the outer peripheral region (i.e., inactive region) of the liquid crystal layer using a dispenser having a nozzle.

Hereinafter, the driving mode of the transmittance variable optical laminate of the present invention according to individual driving of the unit cells described above will be described.

Meanwhile, before describing the driving mode according to individual driving of the unit cells, the light transmission mode and light-blocking mode of the optical laminate according to the exemplary embodiment of the present invention will first be described.

It is assumed that the absorption axes of the first polarizing plate and the second polarizing plate in the optical laminate according to the exemplary embodiment are orthogonal to each other and the liquid crystal layer is driven in a twisted nematic (TN) mode.

Here, it is assumed that the absorption axis of the first polarizing plate is designed to be parallel to the y-axis in the plane direction, the absorption axis of the second polarizing plate is designed to be parallel to the x-axis in the plane direction, and the absorption axes of the first polarizing plate and the second polarizing plate are arranged to be orthogonal to each other.

In addition, it is assumed that the long axis of the liquid crystal compound in the liquid crystal layer disposed adjacent to the first polarizing plate is designed to be arranged parallel to the x-axis in the plane direction and orthogonal to the absorption axis of the first polarizing plate, and that the long axis of the liquid crystal compound arranged adjacent to the second polarizing plate is designed to be arranged parallel to the y-axis in the plane direction and orthogonal to the absorption axis of the second polarizing plate.

Explaining the light transmission mode of the optical laminate, external light incident from the rear side of the optical laminate (rear side means the outer side of the second polarizing plate, and is used with the same meaning hereinafter) is linearly polarized parallel to the y-axis in the plane direction by the second polarizing plate of the optical laminate.

At this time, if no driving voltage is applied to the inside of the liquid crystal layer, the liquid crystal compound disposed in the liquid crystal layer maintains the initial arrangement state.

Accordingly, the external light linearly polarized in the y-axis direction passes through the liquid crystal compound arranged in the liquid crystal layer to become linearly polarized parallel to the x-axis in the plane direction identical to the transmission axis of the first polarizing plate, and the linearly polarized external light passes through the first polarizing plate.

Accordingly, the external light is output through the first polarizing plate, and a light transmission mode is realized in which an object or image located on the rear side of the optical laminate can be viewed.

In addition, explaining the light-blocking mode of the optical laminate, external light incident from the rear side of the optical laminate is linearly polarized parallel to the y-axis in the plane direction by the second polarizing plate of the optical laminate.

At this time, if a driving voltage is applied to the inside of the liquid crystal layer, the liquid crystal compound arranged in the liquid crystal layer changes its arrangement state to be parallel to the thickness direction of the liquid crystal layer, i.e., the z-axis direction.

Accordingly, the external light linearly polarized in the y-axis direction passes through the liquid crystal compound arranged in the liquid crystal layer as it is and becomes linearly polarized parallel to the y-axis in the plane direction identical to the absorption axis of the first polarizing plate, and the linearly polarized external light is absorbed by the first polarizing plate and does not pass therethrough.

Accordingly, the external light is ultimately prevented from being output, by the first polarizing plate, thereby realizing a light-blocking mode in which an object or image located on the rear side of the optical laminate cannot be viewed.

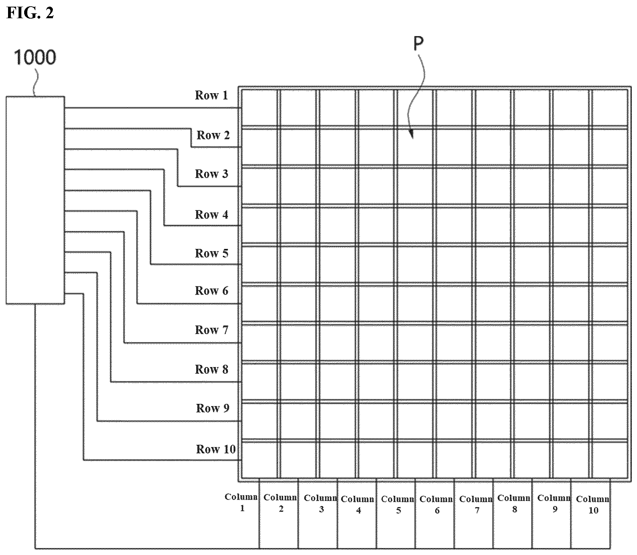

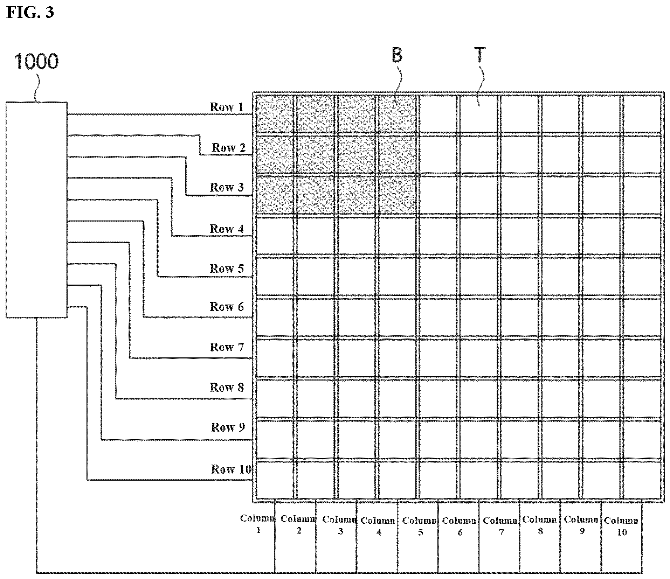

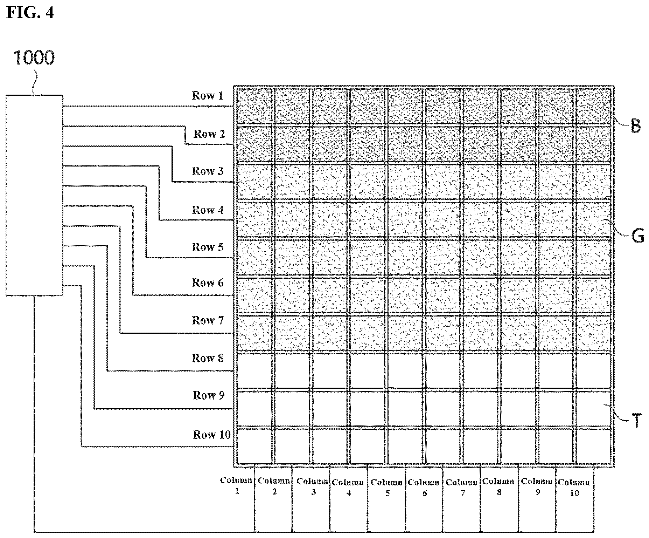

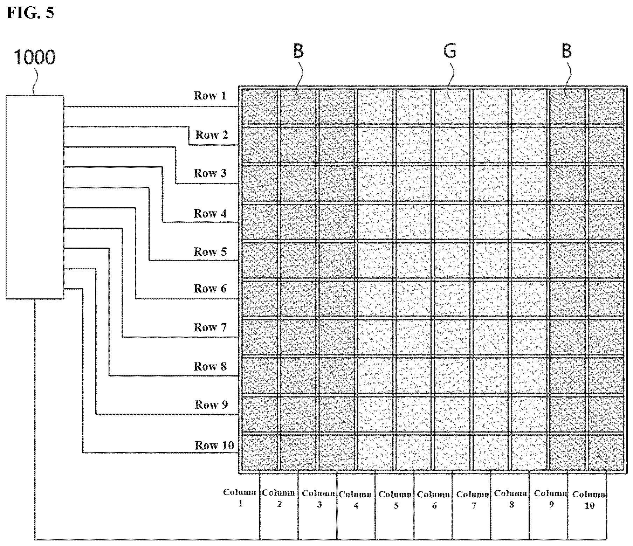

FIGS. 2 to 5 illustrate various driving modes of the transmittance variable optical laminate of the present invention, by way of an example where the optical laminate according to the exemplary embodiment has a matrix of 10 x 10 unit cells. Specifically, FIG. 2 shows a full light transmission mode, FIG. 3 shows a mosaic mode, and FIGS. 4 and 5 show a gradient mode.

Referring to FIGS. 2 to 5, an optical laminate according to an exemplary embodiment of the present invention may include a first electrode layer having first unit electrodes of rows 1 to 10; a second electrode layer having second unit electrodes of columns 1 to10; and a driving circuit unit 1000 configured to apply a driving voltage to each of the plurality of unit electrodes.

The first unit electrodes and the second unit electrodes may form unit cells (P) that are regions in which they are arranged orthogonally to each other and overlap each other, and the unit cells P may be individually driven by controlling the driving voltage of each of the first unit electrodes and the second unit electrodes.

According to an exemplary driving method of the present invention, the driving circuit unit 1000 may apply no driving voltage to both the first unit electrodes and the second unit electrodes. In this case, all the unit cells P of the optical laminate are driven in a light transmission mode by the above-described mechanism, and as a full light transmission mode is realized as shown in FIG. 2, an object or image located on the rear side of the optical laminate may be clearly recognized.

In addition, according to another exemplary driving method of the present invention, the maximum voltage may be applied to the unit electrodes of rows 1 to 3 among the first unit electrodes by the driving circuit unit 1000, and the voltage may be connected to the unit electrodes of columns 1 to 4 among the second unit electrodes. In this case, the maximum driving voltage is applied to the unit cells P in the region where the unit electrodes of rows 1 to 3 and columns 1 to 4 overlap one another, so that the unit cells P in this region are driven in a light-blocking mode by the above-described mechanism, and the driving voltage is not applied to the remaining unit cells P, so that the unit cells P in this region are driven in a light transmission mode by the above-described mechanism. Accordingly, as shown in FIG. 3, the unit cells in the region driven in the light-blocking mode may serve as a light-blocking region B, and the remaining unit cells driven in the light transmission mode may serve as a light-transmitting region T.

In addition, according to another exemplary driving method of the present invention, the driving circuit unit 1000 may apply the maximum voltage to the unit electrodes of rows 1 and 2 among the first unit electrodes, and apply a voltage lower than the maximum voltage to the unit electrodes of rows 3 to 7, and the voltage may be connected to the unit electrodes of columns 1 to 10 among the second unit electrodes. In this case, the maximum driving voltage is applied to the unit cells P of the region where the unit electrodes of rows 1 and 2 and columns 1 to 10 overlap one another, so that the unit cells P of this region are driven in a light-blocking mode by the mechanism described above, and a driving voltage lower than the maximum driving voltage is applied to the unit cells (P) of the region where the unit electrodes of rows 3 to 7 and columns 1 to 10 overlap one another, so that the unit cells P of this region are driven in a gray mode having a lower light-blocking rate than the light-blocking mode by the mechanism described above. In addition, no driving voltage is applied to the remaining unit cells P, so that the unit cells P of this region are driven in a light transmission mode by the mechanism described above. Accordingly, as shown in FIG. 4, the unit cells of the region driven in the light-blocking mode may serve as a light-blocking region B, the unit cells of the area driven in the gray mode may serve as a gray region G, and the remaining unit cells driven in the light transmission mode may serve as a light-transmitting region T.

In addition, according to another exemplary driving method of the present invention, the maximum voltage may be applied to the unit electrodes of columns 1 to 3 and columns 9 and 10 among the second unit electrodes by the driving circuit unit 1000, a voltage lower than the maximum voltage may be applied to the unit electrodes of columns 4 to 8, and the voltage may be connected to the unit electrodes of rows 1 to 10 among the first unit electrodes. In this case, the maximum driving voltage is applied to the unit cells (P) of the region where the unit electrodes of columns 1 to 3 and columns 9 and 10 and the unit electrodes of rows 1 to 10 overlap one another, so that the unit cells P of this region are driven in the light-blocking mode by the above-described mechanism, and a driving voltage lower than the maximum driving voltage is applied to the unit cells P of the region where the unit electrodes of columns 4 to 8 and the unit electrodes of rows 1 to 10 overlap each other, so that the unit cells P of this region are driven in a gray mode having a lower light-blocking rate than the light-blocking mode by the above-described mechanism. Accordingly, as shown in in FIG. 5, the unit cells of the region driven in the light-blocking mode serve as a light-blocking region B, and the unit cells of the region driven in the gray mode may serve as a gray region G.

Meanwhile, the above-described exemplary driving mode of the present invention is intended to explain an embodiment of the present invention, and therefore, as described above, the driving mode of the present invention is not necessarily limited to the driving mode described above.

In one embodiment, the driving voltage for driving the unit cells may be appropriately set according to the needs of the user. However, in the case of the present invention, since the optical laminate does not include a substrate for forming the electrode layer, it has a small thickness and is driven by the polarizing plates disposed on both sides of the laminate and the liquid crystal layer including the liquid crystal compound. In light of this fact, the optical laminate of the present invention may be driven by a lower driving voltage than that in a driving mode that uses polymer dispersed liquid crystals (PDLC) or electrophoretic particles. The optical laminate of the present invention is characterized in that it may exhibit the maximum transmittance and minimum transmittance per unit cell at a driving voltage of, for example, 10 V or less.

In one embodiment, the maximum transmittance is preferably 35% to 45% in the front direction, and the minimum transmittance is preferably 0% to 3% in the front direction. When the maximum transmittance and the minimum transmittance satisfy the above ranges, there are advantages in that, in the light transmission mode, an object or image located on the rear side of the laminate may be clearly recognized, and in the light-blocking mode, external light may be effectively blocked, so that effective control of the transmittance of external light is possible when the mode is switched.

The transmittance variable optical laminate of the present invention may further include other members within a range that does not impair the purpose of the present invention, and for example, it may further include a pressure-sensitive adhesive layer, a UV-absorbing layer, and/or a hard coating layer.

The pressure-sensitive adhesive layer may be formed on one or both surfaces of the optical laminate using an adhesive or a pressure-sensitive adhesive, and preferably has an appropriate pressure-sensitive adhesive force so that peeling, bubbles, etc. do not occur during handling of the optical laminate, as well as transparency and thermal stability.

The adhesive may be a conventional or later-developed adhesive, and for example, a photocurable adhesive may be used.

The photocurable adhesive exhibits a strong adhesive force by being crosslinked and cured with active energy rays such as ultraviolet (UV) rays and electron beam (EB), and may be composed of a reactive oligomer, a reactive monomer, a photopolymerization initiator, etc.

The reactive oligomer is an important component that determines the properties of the adhesive, and forms a cured coating film by forming a polymer bond through a photopolymerization reaction. Usable reactive oligomers include polyester-based resins, polyether-based resins, polyurethane-based resins, epoxy-based resins, polyacrylic resins, silicone-based resins, etc.

The reactive monomer acts as a crosslinking agent and a diluent for the above-described reactive oligomer and affects the adhesive properties. Usable reactive monomers include monofunctional monomers, polyfunctional monomers, epoxy-based monomers, vinyl ethers, cyclic ethers, etc.

The photopolymerization initiator acts to initiate photopolymerization by absorbing light energy to generate radicals or cations. An appropriate photopolymerization initiator selected depending on the photopolymerization resin may be used.

The pressure-sensitive adhesive may be a conventional or later-developed pressure-sensitive adhesive. In one or more embodiments, the pressure-sensitive adhesive may be an acrylic pressure-sensitive adhesive, a rubber-based pressure-sensitive adhesive, a silicone-based pressure-sensitive adhesive, a urethane-based pressure-sensitive adhesive, a polyvinyl alcohol-based pressure-sensitive adhesive, a polyvinyl pyrrolidone-based pressure-sensitive adhesive, a polyacrylamide-based pressure-sensitive adhesive, a cellulose-based pressure-sensitive adhesive, a vinyl alkyl ether-based pressure-sensitive adhesive, or the like. The pressure-sensitive adhesive is not particularly limited as long as it has adhesive and viscoelastic properties. However, the pressure-sensitive adhesive may preferably be an acrylic pressure-sensitive adhesive from the viewpoint of ease availability, etc., and may include, for example, a (meth)acrylate copolymer, a crosslinking agent, a solvent, and the like.

The crosslinking agent may be a conventional or later-developed crosslinking agent, and may include, for example, a polyisocyanate compound, an epoxy resin, a melamine resin, a urea resin, a dialdehyde, a methylol polymer, etc. Preferably, it may include a polyisocyanate compound.

The solvent may include a solvent commonly used in the field of resin compositions, and examples thereof include alcoholic compounds such as methanol, ethanol, isopropanol, butanol, and propylene glycol methoxy alcohol; ketone-based compounds such as methyl ethyl ketone, methyl butyl ketone, methyl isobutyl ketone, diethyl ketone, and dipropyl ketone; acetate-based compounds such as methyl acetate, ethyl acetate, butyl acetate, and propylene glycol methoxy acetate; cellosolve-based compounds such as methyl cellosolve, ethyl cellosolve, and propyl cellosolve; and hydrocarbon-based compounds such as hexane, heptane, benzene, toluene, and xylene. These solvents may be used alone or in combination of two or more.

The thickness of the pressure-sensitive adhesive layer may be appropriately determined depending on the type of resin acting as a pressure-sensitive adhesive, the pressure-sensitive adhesive strength, the environment in which the pressure-sensitive adhesive is used, etc. In one embodiment, the pressure-sensitive adhesive layer may have a thickness of 0.01 to 500 µm, preferably 0.05 to 450 µm, more preferably 1 to 400 µm, in order to ensure sufficient pressure-sensitive adhesive strength and minimize the thickness of the optical laminate.

In one embodiment, the pressure-sensitive adhesive layer may be formed on one or both surfaces of the polarizing plate by a lamination method.

The UV-absorbing layer is not particularly limited as long as it prevents UV-induced deterioration of the optical laminate. Examples of the UV absorber forming the UV-absorbing layer include salicylic acid-based UV absorbers (phenyl salicylate, p-tert-butyl salicylate, etc.), benzophenone-based UV absorbers (2,4-dihydroxybenzophenone, 2,2'-dihydroxy-4,4'-dimethoxybenzophenone, etc.), benzotriazole-based UV absorbers (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidemethyl)-5'-methylphenyl)benzotriazole, 2,2-methylenebis(4-(1,1,3,3-tetramethylbutyl)-6-(2H-benzotriazol-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxycarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazol-2-yl)-6-(linear and branched-chain dodecyl)-4-methylphenol, a mixture of octyl-3-[3-tert-butyl-4-hydroxy-5-(chloro-2H-benzotriazol-2-yl)phenyl]propionate and 2-ethylhexyl-3-[3-tert-butyl-4-hydroxy-5-(5-chloro-2H-benzotriazol-2-yl)phenyl]propionate, etc.), cyanoacrylate-based ultraviolet absorbers (2'-ethylhexyl-2-cyano-3,3-diphenyl acrylate, ethyl-2-cyano-3-(3',4'-methylenedioxyphenyl)-acrylate, etc.), triazine-based UV absorbers, and the like. Thereamong, a benzotriazole-based UV absorber or a triazine-based UV absorber, which has high transparency and an excellent effect of preventing deterioration of the polarizing plate or the transmittance variable layer, is preferable, and a benzotriazole-based UV absorber having a more appropriate spectral absorption spectrum is particularly preferable. The benzotriazole-based UV absorber may be a bis(benzotriazole) compound, for example, 6,6'-methylenebis(2-(2H-benzo[d][1,2,3]triazol-2-yl)-4-(2,4,4-trimethylpentan-2-yl)phenol), 6,6'-methylenebis(2-(2H-benzo[d][1,2,3]triazol-2-yl)-4-(2-hydroxyethyl)phenol), or the like.

The hard coating layer is not particularly limited as long as it serves to protect members such as the polarizing plate and the transmittance variable layer from external physical or chemical impacts, and a conventional or later-developed hard coating layer may be used.

In one embodiment, the hard coating layer may be formed by applying a composition for forming a hard coating layer onto another member and then curing the same with light or heat. The composition for forming a hard coating layer is not particularly limited and may include, for example, an epoxy-based compound and/or an acrylate-based compound, and a photoinitiator.

As the epoxy-based compound, the acrylate-based compound, and the photoinitiator, those commonly used in the art may be used without limitation. For example, the epoxy-based compound may be a monomer or oligomer having at least one epoxy group in the molecule, the acrylate-based compound may be a monomer or oligomer containing a (meth)acrylate group, and the photoinitiator may be an oxime ester-based compound, etc.

The present invention includes, in addition to the above-described transmittance variable optical laminate, a smart window including the same. In addition, the present invention includes a means of transportation including the smart window, for example, an automobile in which the smart window is applied to at least one of a front window, a rear window, a side window, a sunroof window, and an interior partition, and a wearable device and a window for a building including the smart window.

For example, an automobile including the smart window of the present invention may include a smart window in which vehicle glass is bonded to both sides of the optical laminate. The smart window may be manufactured by, for example, placing an adhesive film and vehicle glass on both sides of the optical laminate, followed by heating using a press machine at a temperature of 90°C and a vacuum of about 1 bar for 10 to 20 minutes, or may be manufactured by coating one surface of vehicle glass with a resin, and vacuum-bonding the vehicle glass to both surfaces of the optical laminate, followed by UV curing. The adhesive film may include an ethylene vinyl acetate (EVA) copolymer film, a poly vinyl butyral (PVB) film, or the like, and the resin may include an optically clear resin (OCR), or the like.

The optically clear resin (OCR) may include a urethane-based resin, an acrylic-based resin, a silicone-based resin, or the like, and may preferably include a silicone-based resin from the viewpoint of excellent heat resistance, easy availability, etc.

In addition, the smart window may be a product in which a window for a building (window glass) is bonded to one or both surfaces of the optical laminate. Alternatively, the smart window is a smart window product manufactured by bonding window glass to one surface of the optical laminate by a lamination method, or a smart window product manufactured by applying a UV adhesive to both surfaces of the optical laminate, and then bonding window glass thereto, followed by UV curing.

### Mode for Invention

Hereinafter, exemplary embodiments of the optical laminate according to the present invention will be described in detail. However, the present invention is not limited to the embodiments disclosed below and may be embodied in various different forms. Rather, these embodiments are provided so that the disclosure of the present invention will be thorough and complete and will fully convey the scope of the present invention to those skilled in the art, and the present invention will only be defined by the scope of the appended claims

### Preparation Example 1: Production of Polarizing Plate

### (1) Swelling Treatment Process

A 60-µm-thick polyvinyl alcohol film (raw film) (manufactured by Kuraray Co., Ltd., trade name: Kurare Poval Film VF-PE#6000, average degree of polymerization: 2,400, degree of saponification: 99.9 mol%) was continuously unwound from a raw film roll, conveyed, and dipped in a swelling bath containing pure water at 20°C for 30 seconds. In this swelling treatment process, roll-to-roll stretching (longitudinal uniaxial stretching) was performed by creating a difference in peripheral speed between the nip rolls. The stretching ratio with respect to the raw film was set to 2.5 times.

### (2) Dyeing Treatment Process

Next, the film that passed through the nip rolls was dipped in a dyeing bath containing pure water/potassium iodide/iodine/boric acid at a mass ratio of 100/2/0.01/0.3 at 30°C for 120 seconds. In this dyeing treatment process, roll-to-roll stretching (longitudinal uniaxial stretching) was performed by creating a difference in peripheral speed between the nip rolls. The stretching ratio with respect to the film after the swelling treatment process was set to 1.1 times.

### (3) Crosslinking Treatment Process

Next, the film that passed through the nip rolls was dipped in a first crosslinking bath containing pure water/potassium iodide/boric acid at a mass ratio of 100/12/4 at 56°C for 70 seconds. Roll-to-roll stretching (longitudinal uniaxial stretching) was performed by creating a difference in peripheral speed between the nip rolls and the nip rolls provided between the first crosslinking bath and the second crosslinking bath. The stretching ratio with respect to the film after the dyeing treatment process was set to 1.9 times.

### (4) Color Complementing Process

Next, the film after the crosslinking treatment was dipped in a second crosslinking bath containing potassium iodide/boric acid/pure water at a mass ratio of 9/2.9/100 at 40°C 10 seconds.

### (5) Cleaning Treatment Process

Next, the film after the second crosslinking treatment was dipped in a cleaning bath containing pure water at 14°C for 5 seconds, and cleaned with a shower volume of 5 m³/h at a shower temperature of 14°C.

### (6) Drying Treatment Process

Next, the film after the cleaning treatment process was heat-dried at 80°C for 190 seconds by passage through a drying oven, thereby producing a polarizer film. The moisture content after drying was 13.6%, and the thickness of the obtained polarizer film was about 2 µm.

### (7) Bonding Treatment Process

Next, as an adhesive, an aqueous adhesive containing 5 parts by mass of polyvinyl alcohol per 100 parts by mass of water was prepared. Thereafter, a protective film was laminated on both surfaces of the polarizer film using the prepared UV adhesive. The obtained laminate was exposed to UV light, and the adhesive was cured, thereby producing a polarizing plate. The thickness of the adhesive layer in the produced polarizing plate was about 2 µm.

### Preparation Example 2: Preparation of Hard Coating Composition

A hard coating composition was prepared by mixing 16.2 g of a dendrimer compound (Miwon Specialty Chemical Co., Ltd., SP-1106), 14.4 g of inorganic nanoparticles (50 wt% of silica particles with an average particle diameter of 10 nm to 20 nm; solvent: methyl ethyl ketone (MEK)), 1.8 g of a polyfunctional (meth)acrylate containing an ethylene glycol group, 0.7 g of a photoinitiator (1-hydroxycyclohexyl phenyl ketone), and 2.9 g of methyl ethyl ketone.

### Preparation Example 3: Formation of Hard Coating Layer

The hard coating composition prepared in Preparation Example 2 was applied by bar coating to one surface of the polarizing plate using #10 Mayer bar, dried at 80°C for 5 minutes, and then cured with a high-pressure mercury lamp at a light dose of 500 mJ/cm², thereby forming a hard coating layer with a thickness of about 7 µm.

### Preparation Example 4: Formation of Electrode Layer

The polarizing plate having the hard coating layer formed in Preparation Example 3 was placed, the sputter gun was operated by application of 450 W DC power, and plasma was induced in the ITO (10 wt% Sn doped In₂O₃) target to form an ITO electrode layer (90 nm) on the hard coating layer. The formed electrode layer was treated with ions by operating the ion gun with 50 W DC power. At this time, the pressure was maintained at 3 mTorr at room temperature, and argon gas and oxygen gas were supplied at 30 sccm and 1 sccm, respectively. The ITO thickness was measured using FT-SEM.

### Preparation Example 5: Formation of Alignment Film

The ITO electrode layer of each of the upper polarizing plate and the lower polarizing plate, manufactured in Preparation Example 4, was coated with an alignment solution which was then dried (80°C/2 minutes). Thereafter, the dried alignment solution was irradiated with UV light to form an alignment film.

### Preparation Example 6: Formation of Unit Electrodes (Formation of Separation Grooves in Electrode Layer)

A Gaussian laser beam was continuously irradiated onto the alignment film of each of the upper and lower polarizing plates manufactured in Preparation Example 5 to etch the alignment film and the ITO electrode layer and etch up to a region of about 1 µm in depth on the hard coating layer, thereby forming a plurality of electrically isolated unit electrodes in each electrode layer. At this time, five separation grooves were formed in each electrode layer to form a matrix of 6 x 6 unit cells.

### Preparation Example 7: Ball Spacer Spray

A ball spacer-containing solvent was prepared by mixing 0.03 g of a ball spacer (SP series, SEKISUI Co., Ltd.) with 100 ml of IPA. Thereafter, the lower polarizing plate manufactured in Preparation Example 6 was placed in a spacer sprayer (SDSS-KHU02, Shindo Eng Lab), and the prepared solvent was sprayed at 110°C and then dried for 20 minutes, thereby forming a ball spacer on the alignment film.

### Preparation Example 8: Manufacturing of Optical Laminate

A sealant (Photolec A, 10,000 mPa·s, SEKISUI Co., Ltd.) was applied to the outer peripheral surface of the ITP electrode layer of the lower polarizing plate, manufactured in Preparation Example 7, using a sealant dispenser (SHOTmini 200Ωx, MUSASHI Co., Ltd.) with a sharp needle (SPN-0.25-12.7L) at a discharge pressure of 200 mPa according to the product size drawing, and a liquid crystal was injected onto the alignment film using the ODF (One Drop Filling) process. Thereafter, in a state in which the upper polarizing plate manufactured in Preparation Example 6 and the lower polarizing plate were arranged parallel to each other so that the polarizing axes of the upper and lower polarizing plates were at 0° or 90° with each other and the unit electrodes formed on the upper and lower polarizing plates were orthogonal to one another, the polarizing plates were bonded to each other at a pressure of 3 kg/cm², and then UV curing (500 mJ/cm²) was performed along the sealant line, thereby manufacturing an optical laminate for a smart window.

### Preparation Example 9: Formation of Connection Pads

A conductive copper tape (TERAOKA, No. 8323) was adhered to one end of each unit electrode formed on each of the upper and lower ITO electrode layers of the optical laminate manufactured in Preparation Example 8, thereby forming connection pads.

### Experimental Example: Measurement of Voltage Intensity-Dependent Transmittance of Each Unit Cell

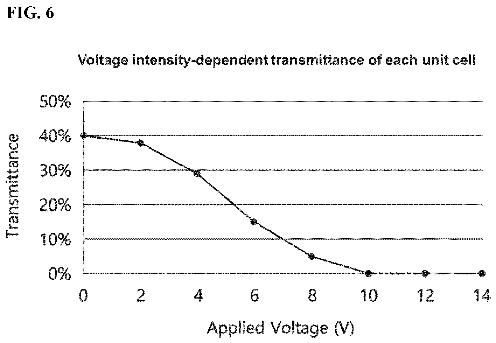

The driving voltage-dependent transmittance of each unit cell of the optical laminate for a smart window manufactured according to Preparation Examples 1 to 9 was measured, and the results are shown in Table 1 below and FIG. 6.

**[Table 1]**

| Applied voltage | 0 V | 2 V | 4 V | 6 V | 8 V | 10 V | 12 V | 14 V |
|---|---|---|---|---|---|---|---|---|
| Transmittance | 40.2% | 38.3% | 29.2% | 15.4% | 5.0% | 0.1% | 0.1% | 0.1% |
| Appearance | Good | Good | Good | Good | Good | Good | Good | Good |

Referring to Table 1 above and FIG. 6, it can be seen that, in the case of the optical laminate according to the exemplary embodiment of the present invention, the transmittance in the light transmission mode (applied voltage: 0 V) is 40.2%, so that an object or image located on the rear side of the laminate can be clearly recognized, and the transmittance in the light-blocking mode (applied voltage: 10 V or higher) is 0.1%, so that external light can be effectively blocked.

In addition, it can be seen that, at an applied voltage of 10 V, the lower limit of transmittance in the light-blocking mode is reached, suggesting that the switching between the light-blocking mode and the light transmission mode of the laminate can be made smoothly even at a driving voltage of 10 V, which is relatively low compared to that of conventional optical laminates.

Furthermore, it can be seen that it is possible to appropriately control the transmittance at a driving voltage of more than 0 V to less than 10 V, so that the transmittance in the gray mode can be appropriately set according to the user's needs.

### Industrial Applicability

The transmittance variable optical laminate according to the present invention may be driven in various modes compared to conventional optical laminates by including a plurality of divided driving regions. Specifically, when a voltage is applied to the electrode layer, the unit cells may be individually driven, and thus the optical laminate of the present invention has the effect of enabling only a desired unit region to be selectively driven.

## Claims

1. A transmittance variable optical laminate comprising:
a first polarizing plate;
a first electrode layer formed on one surface of the first polarizing plate;
a second polarizing plate opposite to the first polarizing plate;
a second electrode layer formed on one surface of the second polarizing plate and opposite to the first electrode layer; and
a liquid crystal layer provided between the first electrode layer and the second electrode layer,
wherein at least one of the first electrode layer and the second electrode layer is formed in direct contact with any one of the first polarizing plate and the second polarizing plate, and
wherein the first electrode layer comprises a plurality of first unit electrodes arranged in a first direction, and the second electrode layer comprises a plurality of second unit electrodes arranged in a second direction.

2. The transmittance variable optical laminate of claim 1, wherein the unit electrodes are formed as stripes spaced apart from each other.

3. The transmittance variable optical laminate of claim 1, wherein the first unit electrodes and the second unit electrodes are arranged to be orthogonal to each other.

4. The transmittance variable optical laminate of claim 1, wherein a spacing between the unit electrodes is 30 to 100 µm.

5. The transmittance variable optical laminate of claim 1, wherein the transmittance variable optical laminate exhibits maximum transmittance and minimum transmittance at a driving voltage of 10 V or less.

6. The transmittance variable optical laminate of claim 5, wherein the maximum transmittance is 35% to 45%.

7. The transmittance variable optical laminate of claim 5, wherein the minimum transmittance is 0% to 3%.

8. The transmittance variable optical laminate of claim 1, further comprising a driving circuit unit configured to apply different driving voltages to the unit electrodes.

9. The transmittance variable optical laminate of claim 1, wherein at least one of the first electrode layer and the second electrode layer comprises at least one selected from the group consisting of a transparent conductive oxide, a metal, a carbonaceous material, a conductive polymer, a conductive ink, and nanowires.

10. The transmittance variable optical laminate of claim 1, wherein at least one of the first polarizing plate and the second polarizing plate has a thickness of 30 to 200 µm.

11. The transmittance variable optical laminate of claim 1, wherein the liquid crystal layer comprises at least one spacer selected from the group consisting of a ball spacer and a column spacer.

12. The transmittance variable optical laminate of claim 11, wherein the spacer has a height of 1 to 10 µm.

13. The transmittance variable optical laminate of claim 11, wherein an area occupied by the spacer in the liquid crystal layer is 0.01% to 10% of an area of the liquid crystal layer.

14. The transmittance variable optical laminate of claim 1, further comprising at least one selected from the group consisting of an overcoat layer, a pressure-sensitive adhesive layer, a UV-absorbing layer, and a hard coating layer.

15. A smart window comprising the transmittance variable optical laminate of any one of claims 1 to 14.

16. A means of transportation comprising the smart window of claim 15.

17. An automobile in which the smart window of claim 15 is applied to at least one of a front window, a rear window, a side window, a sunroof window, and an interior partition.

18. A wearable device comprising the smart window of claim 15.

19. A window for a building comprising the smart window of claim 15.
